# FASCICULE DE BREVET EUROPEEN

(11) **EP 0 867 011 B1**
(45) Date de publication et mention de la délivrance du brevet: **07.07.1999**
(21) Numéro de dépôt: 96941725.2
(22) Date de dépôt: 10.12.1996
(51) Int. Cl.: G06K 7/06

(54) **LECTEUR PORTABLE DE CARTE A PUCE APTE A FONCTIONNER MEME RANGE**
TRAGBARER CHIPKARTENLESER, DER AUCH IN EINEM HALTER VERWENDET WERDEN KANN
PORTABLE SMART CARD READER CAPABLE OF BEING USED EVEN WHEN STORED IN A HOLDER

(30) Priorité: 11.12.1995 FR 9514853
(43) Date de publication de la demande: 30.09.1998
(73) Titulaire: GEMPLUS S.C.A., 13881 Gémenos Cédex (FR)
(72) Inventeur: MANTHE, Alexandre, F-13100 Aix-en-Provence (FR)
(86) Numéro de dépôt international: FR9601963
(87) Numéro de publication internationale: WO9722081

(56) Documents cités:
- WO-A-94/23399
- DE-A- 3 637 684
- US-A- 5 015 830

## Description

L'invention se rapporte à un lecteur portable de carte à puce. Les lecteurs portables de cartes à puce sont notamment très utiles pour lire des informations contenues dans des porte-monnaie électroniques par exemple.

Ces lecteurs de cartes à puce sont destinés à être utilisés à n'importe quel moment, chez un commerçant, dans la rue ou en voiture. Par conséquent, pour permettre une utilisation efficace quel que soit le lieu et/ou le moment, il est nécessaire que leur maniement puisse être simple et rapide.

Actuellement, il existe des lecteurs portables de cartes à puce qui sont réalisés aux dimensions des cartes à puce et qui présentent une faible épaisseur de l'ordre de quelques millimètres. Ces lecteurs possèdent des dimensions suffisamment faibles pour pouvoir être insérés dans un compartiment de porte-cartes (voir US-A-5,015,830).

De façon générale, les lecteurs connus ne comportent pas de moyens de fixation à un suppport. En particulier, la demanderesse s'est rendu compte que l'insertion, de même que l'extraction, d'un lecteur dans un compartiment de porte-cartes ne s'effectue pas de manière aisée. En effet, l'épaisseur du lecteur étant environ deux à quatre fois plus élevée que celle d'une carte à puce, il faut écarter au maximum la paroi du compartiment d'un porte-cartes et exercer une pression relativement forte sur le lecteur pour pouvoir l'introduire dans un compartiment.

De plus, le fait de ranger le lecteur dans un compartiment de porte-cartes entraîne quelques inconvénients d'ordre pratique lors de son utilisation. En effet, pour pouvoir lire des informations contenues dans une carte à puce, il faut tout d'abord sortir la carte du porte-cartes, puis extraire le lecteur de son compartiment, et enfin il faut introduire la carte dans le lecteur tout en gardant le porte-cartes dans les mains ou à proximité. Il est clair que l'utilisateur doit faire preuve d'une grande habileté pour pouvoir tenir à la fois le lecteur, la carte, le porte-carte et ensuite introduire la carte dans le lecteur. La manipulation n'est pas aisée.

La présente invention permet de résoudre simultanément ces problèmes de rangement et de disponibilité, et d'améliorer par conséquent les conditions d'utilisation du lecteur. Elle propose en effet un lecteur portable de carte à puce, destiné à être rangé dans un porte-cartes, ou accroché à un support, principalement caractérisé en ce qu'il comprend, sur une de ses faces, un moyen d'accrochage afin de permettre sa fixation sur un support, notamment sur la paroi d'un compartiment du porte-cartes tout en laissant la fente d'insertion dégagée.

Grâce à ce moyen d'accrochage, il est possible d'utiliser le lecteur sans avoir à le sortir du porte-cartes. Ainsi, il suffit de ne tenir que la carte et le porte-cartes. Le maniement du lecteur est par conséquent rendu plus aisé et une lecture rapide, du contenu d'une carte, en toute circonstance est rendue possible.

Le moyen d'accrochage doit assurer une bonne prise pour permettre un maintien efficace du lecteur notamment lors de l'introduction de la carte à puce qui a alors tendance à exercer une légère poussée sur le lecteur. Or, si le moyen d'accrochage n'assure pas un bon maintien, le lecteur risque de se déplacer sous l'action de la poussée. Pour éviter cela il faut à la fois maintenir solidement le lecteur, du côté opposé au sens de l'insertion de la carte, ainsi que le porte-cartes.

Par conséquent, selon une autre caractéristique de l'invention, le moyen d'accrochage a été réalisé de manière à ce qu'il assure un maintien rigide du lecteur, afin d'éviter que ce-dernier se déplace lors de l'introduction d'une carte à puce. Ainsi, le moyen d'accrochage comporte au moins une languette qui peut, par exemple, se présenter sous la forme d'un triangle ou d'un rectangle pour permettre un maintien efficace. Lorsque le moyen d'accrochage comporte deux languettes, celles-ci sont de préférence rectangulaires et indépendantes.

La forme du moyen d'accrochage permettant d'assurer le maintien du lecteur, il n'y a alors plus de nécessité de maintenir le lecteur lors de l'introduction de la carte, il suffit juste de tenir le porte-cartes.

Selon un autre aspect de l'invention, on s'est rendu compte qu'il n'est pas pratique d'accrocher, à la paroi d'un compartiment de porte-cartes, un lecteur dont les dimensions condamnent plus d'un compartiment du porte-cartes.

En effet, dans la société actuelle, de nombreux services proposent l'utilisation de cartes à puce si bien qu'un nombre relativement important de consommateurs est amené à utiliser plus d'une demi douzaine de cartes.

Par conséquent, selon un autre objet de l'invention le lecteur, qui comporte en outre un dispositif d'affichage, présente des dimensions permettant l'introduction de la carte soit perpendiculairement au sens selon lequel sont affichées les informations sur le dispositif d'affichage, soit parallèlement à ce sens.

D'autres caractéristiques et avantages de l'invention apparaîtront à la lecture de la description faite à titre d'exemple illustratif et non limitatif en référence aux figures annexées qui représentent:
- les figures 1a, 1b, et 1c, représentent trois versions de la face arrière d'un lecteur selon l'invention,
- les figures 1d et 1e, la face avant du lecteur des figures 1a, 1b et 1c,
- la figure 2, le lecteur de la figure 1 accroché à un compartiment d'un porte-cartes,
- la figure 3, une vue éclatée du lecteur de la figure 1.

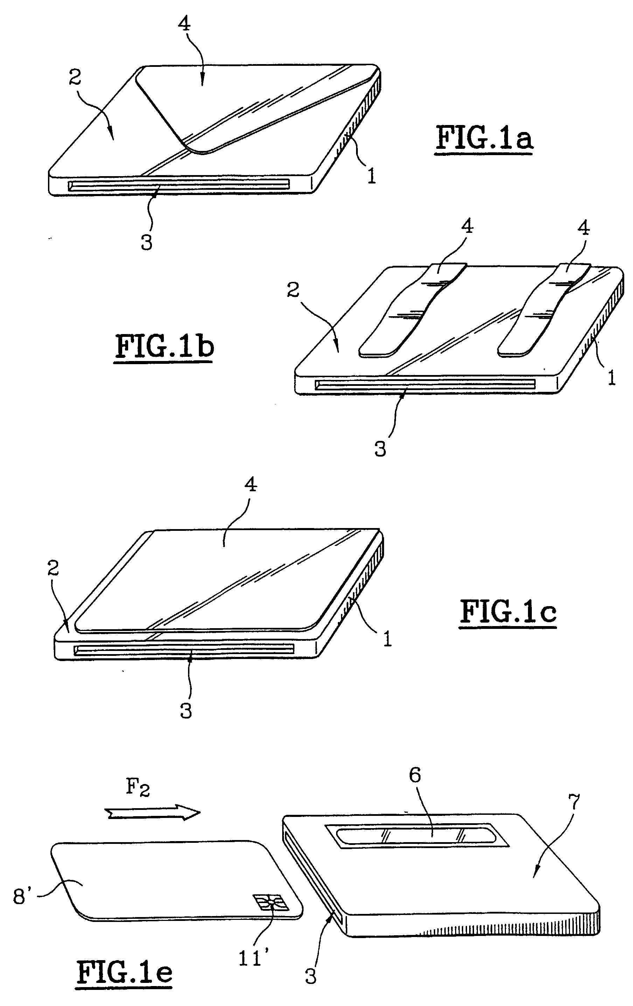

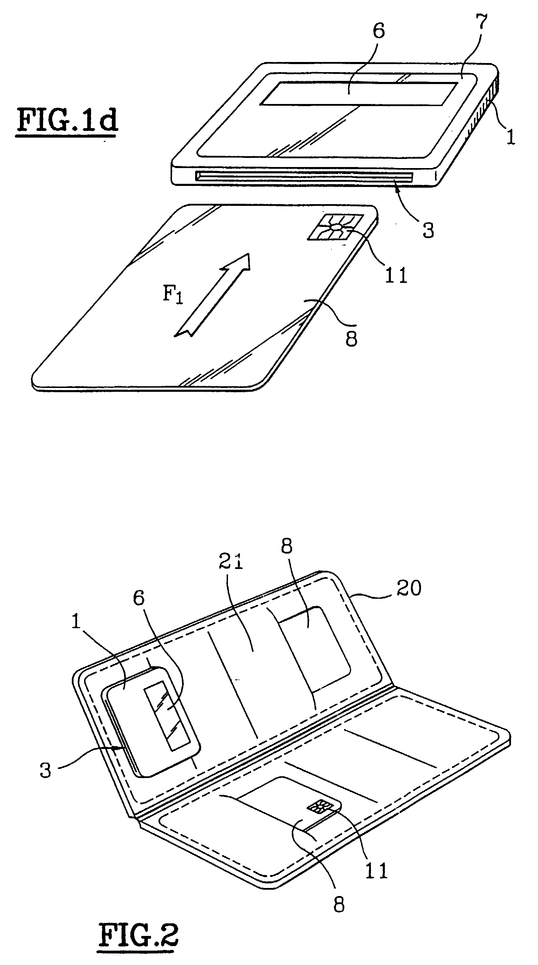

Un lecteur portable de carte à puce, réalisé selon la présente invention, est désigné par la référence générale 1 sur les figures 1a, 1b, 1c, 1d et 1e. Ce lecteur comprend sur une de ses faces, par exemple sur sa face arrière 2, un moyen d'accrochage 4 destiné à se glisser dans un compartiment de porte-cartes ou de façon générale, à être accroché à un support plat. Ce moyen d'accrochage 4 est par exemple en plastique et moulé avec la face arrière 2 du lecteur. Son épaisseur est de préférence inférieure ou égale à celle d'une carte à puce, de manière à ce qu'il puisse être facilement introduit dans un compartiment de porte-cartes.

De manière avantageuse, le moyen d'accrochage 4 comporte au moins une languette semi-rigide permettant d'assurer un maintien rigide du lecteur sur un compartiment de porte-cartes, et se présentant sous différentes formes. Ainsi, le moyen d'accrochage 4 comporte une languette se présentant sous la forme d'un triangle tel que représenté sur la figure 1a, ou sous la forme d'un rectangle tel que représenté sur la figure 1c. Selon une autre variante de réalisation, le moyen d'accrochage 4 comporte deux languettes indépendantes rectangulaires tel que représenté sur la figure 1b.

Ces différentes formes permettent au moyen d'accrochage d'assurer une bonne prise sur un support d'accrochage et notamment sur la paroi d'un compartiment de porte-cartes, et assurent par conséquent un maintien rigide du lecteur dans un porte-cartes.

Le lecteur 1 comprend en outre une fente d'insertion 3 apte à recevoir une carte à puce. De manière avantageuse, l'épaisseur et la largeur de cette fente 3 permettent l'insertion d'une carte à puce dont le format est décrit dans la norme ISO 7816-1 et ISO 7816-2.

La figure 1d représente la face avant 7 du lecteur 1. Cette face avant comporte un dispositif d'affichage 6, tel qu'un écran à cristaux liquides par exemple, relié à une électronique positionnée entre deux pièces plastiques constituant d'une part le corps du lecteur et d'autre part la face arrière du lecteur. Une carte à puce 8 est introduite dans la fente 3 du lecteur dans le sens de la flèche F1, c'est-à-dire perpendiculairement au sens selon lequel sont affichées les informations sur le dispositif d'affichage 6.

Dans un autre mode de réalisation du lecteur selon l'invention, tel que représenté sur la figure le, une carte à puce 8' est introduite, dans la fente latérale d'insertion 3' du lecteur, dans le sens de la flèche F2, c'est-à-dire parallèlement au sens selon lequel sont affichées les informations sur le dispositif d'affichage 6.

Le lecteur comporte en outre un connecteur interne à contacts affleurants et légèrement en saillie, non visible sur les figures 1d et 1e. Ce connecteur interne est conçu et placé de telle manière qu'il puisse venir en contact avec les différents contacts affleurants 11, 11' de la carte à puce 8, 8'.

La figure 2 représente le lecteur 1, précédemment décrit, accroché sur la paroi d'un compartiment 21 d'un porte-cartes 20. Pour cela, le moyen d'accrochage 4 est logé dans le compartiment 21 du porte-cartes et permet de maintenir le lecteur solidement en place en enserrant la paroi de ce compartiment 21. De plus, grâce à ce système d'accrochage, l'écran 6 et la fente d'insertion 3 du lecteur 1 restent dégagés du compartiment 21, si bien que l'utilisation du lecteur 1 est rendue possible sans avoir à le sortir du porte-cartes. Ainsi, il est possible de faire fonctionner le lecteur en toutes circonstances. Pour cela, il suffit de sortir une carte à puce du porte-cartes 20, et de l'insérer dans la fente 3 du lecteur maintenu solidement sur la paroi d'un compartiment 21 du porte-cartes 20.

En général, les lecteurs portables de cartes à puce sont réalisés au format classique des cartes à puces. Cependant, dans le cas de la présente invention on s'est rendu compte que le fait d'accrocher de tels lecteurs, sur un compartiment 21 de porte-cartes 20, pose un inconvénient d'ordre pratique puisque tout un côté, ou presque, du porte-cartes 20 est condamné par le lecteur qui recouvre alors plusieurs compartiments.

En effet, comme il a été décrit précédemment, de plus en plus de services proposent actuellement l'utilisation de cartes à puce. De ce fait, un nombre relativement important de consommateurs est amené à posséder plus d'une demi douzaine de cartes.

Pour éviter de condamner une partie du porte-cartes 20, il a donc fallu réaliser un lecteur présentant un format réduit. Ainsi, la longueur du lecteur doit être inférieure ou égale à la longueur d'un compartiment 21 de porte-cartes mais au moins légèrement supérieure à la largeur d'une carte à puce. De préférence la longueur du lecteur est supérieure à la largeur d'une carte à puce de manière à pouvoir guider latéralement une carte à puce lors de l'insertion. Ceci est représenté sur les figues 1d et 1e. De même, la largeur du lecteur est inférieure ou égale à celle d'un compartiment 21 de porte-cartes 20.

Ainsi, les dimensions du lecteur 1 sont telles qu'il n'occulte qu'un seul compartiment 21 de carte à puce lorsqu'il est accroché dans un porte-cartes 20.

De plus, dans le cas où il est prévu d'insérer une carte à puce parallèlement au sens selon lequel sont affichées les informations sur le dispositif d'affichage 6, la largeur du lecteur doit nécessairement être au moins légèrement supérieure à celle de la carte à puce 8'.

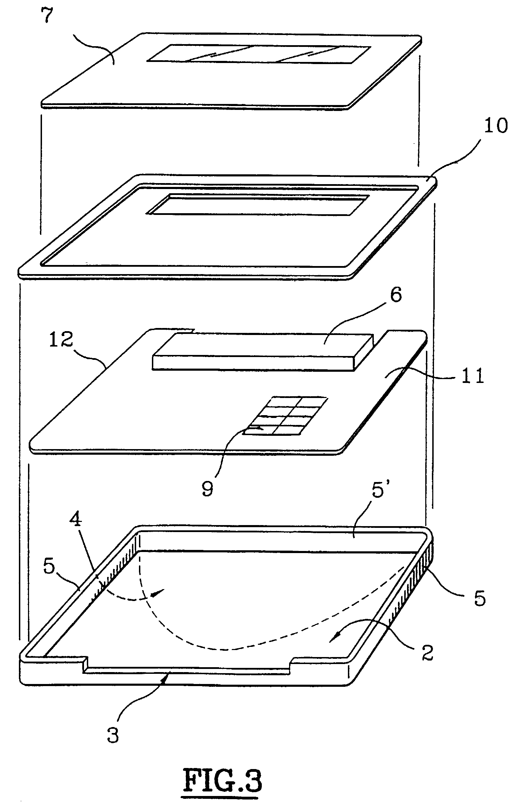

La figure 3 représente le lecteur 1 sous forme éclatée. Le lecteur comporte quatre parties: la face arrière 2, le corps 10, la face avant 7 et un ensemble électronique 12. Le moyen d'accrochage 4, réalisé au dos de-la face arrière 2, est représenté en pointillés.

De plus, la face arrière 2 comporte des bords 5 et 5' correspondant respectivement aux guides latéraux et au bord longitudinal du lecteur. Sur cette figure, deux guides latéraux 5 sont représentés si bien que, dans ce cas, seule l'insertion perpendiculaire au sens selon lequel les informations sont affichées sur le dispositif d'affichage 6 est possible.

L'ensemble électronique 12 du lecteur 1 comporte un afficheur 6, une carte électronique 11 et un connecteur interne 9 à contacts affleurants et légèrement en saillie destiné à venir en contact avec les contacts affleurants 11, 11' de la carte à puce 8, 8'.

## Revendications

1. Lecteur portable 1 de carte à puce, destiné à être rangé dans un porte-cartes, caractérisé en ce qu'il comprend, sur une de ses faces, un moyen d'accrochage (4) afin de permettre sa fixation sur un support, notamment sur la paroi d'un compartiment du porte-cartes tout en laissant la fente d'insertion (3) de la carte dégagée.

2. Lecteur selon la revendication 1, caractérisé en ce que le moyen d'accrochage (4) comporte au moins une languette semi-rigide.

3. Lecteur selon l'une des revendications 1 à 2, caractérisé en ce que le moyen d'accrochage (4) comporte une seule languette se présentant sous la forme d'un triangle ou d'un rectangle.

4. Lecteur selon l'une des revendications 1 à 2, caractérisé en ce que le moyen d'accrochage (4) comporte deux languettes indépendantes de forme rectangulaire.

5. Lecteur selon l'une revendications 1 à 4, caractérisé en ce que ses dimensions sont telles qu'il n'occulte qu'un seul compartiment de carte à puce lorsqu'il est accroché dans un porte-cartes.

6. Lecteur selon l'une des revendications 1 à 5, comportant un dispositif d'affichage (6), caractérisé en ce que la carte à puce (8) est insérée perpendiculairement au sens selon lequel sont affichées les informations sur le dispositif d'affichage (6).

7. Lecteur selon l'une des revendications 1 à 5, comportant un dispositif d'affichage (6), caractérisé en ce que la carte à puce (8') est insérée parallèlement au sens selon lequel sont affichées les informations sur le dispositif d'affichage (6).

8. Lecteur selon la revendication 7, caractérisé en ce que sa largeur doit en outre être au moins légèrement supérieure à celle d'une carte à puce (8').

## Patentansprüche

1. Tragbares Lesegerät 1 für Chipskarten, das in eine Kartentasche geräumt werden soll, dadurch gekennzeichnet, dass es auf einer seiner Seiten ein Einhakmittel (4) umfasst, um seine Befestigung auf einem Träger zu ermöglichen, insbesondere an der Wand eines Faches der Kartentasche, wobei der Einfügeschlitz (3) der Karte frei bleibt.

2. Lesegerät nach Anspruch 1, dadurch gekennzeichnet, dass das Einhakmittel (4) mindestens eine halbstarre Lasche umfasst.

3. Lesegerät nach einem der Ansprüche 1 bis 2, dadurch gekennzeichnet, dass das Einhakmittel (4) eine einzige Lasche umfasst, die die Form eines Dreiecks oder eines Rechtecks aufweist.

4. Lesegerät nach einem der Ansprüche 1 bis 2, dadurch gekennzeichnet, dass das Einhakmittel (4) zwei unabhängige, rechteckige Laschen aufweist.

5. Lesegerät nach einer der Ansprüche 1 bis 4, dadurch gekennzeichnet, dass seine Abmessungen so beschaffen sind, dass es nur ein einziges Fach der Chipskarte verdunkelt, wenn es in eine Kartentasche eingehakt ist.

6. Lesegerät nach einem der Ansprüche 1 bis 5, mit einer Anzeigeworrichtung (6), dadurch gekennzeichnet, dass die Chipskarte (8) lotrecht zu der Richtung eingefügt wird, nach der die Informationen auf der Anzeigevorrichtung (6) angezeigt werden.

7. Lesegerät nach einem der Ansprüche 1 bis 5, mit einer Anzeigevorrichtung (6), dadurch gekennzeichnet, dass die Chipskarte (8') parallel zu der Richtung eingefügt wird, nach der die Informationen auf der Anzeigevorrichtung (6) angezeigt werden.

8. Lesegerät nach Anspruch 7, dadurch gekennzeichnet, dass seine Breite weiters mindestens etwas grösser sein muss als diejenige der Chipskarte (8').

## Claims

1. Portable chip card reader 1, intended to be stored in a card holder, characterised in that it comprises, on one of its faces, an attachment means (4) to enable it to be fixed to a support, notably to the wall of a compartment of the card holder whilst leaving the card insertion slot (3) free.

2. Reader according to Claim 1, characterised in that the attachment means (4) includes at least one semi-rigid tongue.

3. Reader according to one of Claims 1 to 2, characterised in that the attachment means (4) includes a single tongue in the shape of a triangle or rectangle.

4. Reader according to one of Claims 1 to 2, characterised in that the attachment means (4) includes two independent tongues of rectangular shape.

5. Reader according to one of Claims 1 to 4, characterised in that its dimensions are such that it obscures only one chip card compartment when it is attached to a card holder.

6. Reader according to one of Claims 1 to 5, having a display device (6), characterised in that the chip card (8) is inserted perpendicular to the direction in which the information is displayed on the display device (6).

7. Reader according to one of Claims 1 to 5, having a display device (6), characterised in that the chip card (8') is inserted parallel to the direction in which the information is displayed on the display device (6).

8. Reader according to Claim 7, characterised in that its width must also be at least slightly greater than that of a chip card (8').
